# EUROPEAN PATENT APPLICATION

(11) **EP 1 526 542 A2**
(43) Date of publication of application: **27.04.2005**
(21) Application number: 04256431.0
(22) Date of filing: 19.10.2004
(51) Int. Cl.: G11B 27/30, G11B 20/12, G11B 7/00

(54) **Information recording apparatus, information recording method and information recording program**

(30) Priority: 21.10.2003 JP 2003360815
(71) Applicant: Pioneer Corporation, Meguro-ku, Tokyo (JP)
(72) Inventor: Muramatsu, Eiji, Pioneer Corporation, Tokorozawa-shi, Saitama (JP); Taniguchi, Shoji, Pioneer Corporation, Tokorozawa-shi, Saitama (JP); Katata, Keiji, Pioneer Corporation, Tokorozawa-shi, Saitama (JP)
(74) Representative: Haley, Stephen

(57) **Abstract**

As a recording medium (100), an optical disc capable of repeated recording, such as a DVD-RW, is applicable. An information recording and reproducing apparatus (200) starts recording by making a sync pattern (14) of recording data correspond to a recording reference position (10) determined by an LPP and the like formed on the optical disc at the time of recording new data on the optical disc. Afterward, the information recording and reproducing apparatus continues the recording by gradually shifting a position of the sync pattern of the recording data with respect to the recording reference position, and performs the recording with the shift quantity (X) fixed to a predetermined shift quantity (α) when a shift quantity (X) thereof reaches a quantity equal to or larger than the predetermined quantity (α). Thereby, at a rewriting portion on the optical disc, the shift between recorded data and a recording start position of recording data for rewriting can be small, and establishing synchronization at the time of reproducing or rewriting can be stably performed. In addition, since the shift quantity is varied at every time of recording the data, there is a small probability that the position of the sync pattern of the recording data is overlapped, and a number of rewriting can be improved.

## Description

The present invention relates to an information recording apparatus which records information on a rewritable-type recording medium capable of repeated recording, an information recording method and an information recording program.

There are known an information recording medium, such as an optical disc represented by a DVD-R (DVD-Recordable) and a DVD-RW (DVD-Re-recordable), and an information recording and reproducing apparatus capable of recording information on the information recording medium and reproducing the recorded information. When the information is recorded on an rewritable-type recording medium capable of repeated recording of the information, such as the DVD-RW, the information is generally recorded so that a sync pattern of a recording signal corresponds to a recording reference position, such as an LPP (Land Pre-pit) formed on a disc. Therefore, since the sync pattern in the recording signal is repeatedly recorded at the same position on the disc over and over again, and the recording reference position on the optical disc and a circumference thereof are deteriorated by a thermal stress, a number of possible rewriting on the rewritable-type recording medium is limited.

In order to improve the number of possible rewriting, when the information is recorded on the rewritable-type recording medium, there is proposed a technique that the recording is performed by randomly shifting a recording start position of the data on the recording medium with respect to the recording reference position. This technique is disclosed in Japanese Patent Application Laid-open under No. 8-10489. Thereby, since the sync pattern in the recording signal is not repeatedly recorded at the same position on the recording medium over and over again, the number of possible rewriting on the optical disc is improved.

However, in the above-mentioned technique, since the recording start position of recording data is varied with respect to the recording reference position on the recording medium, at the time of reproducing and overwrite-recording the recorded data, detecting the recording start position of the recording data and establishing synchronization are sometimes difficult. For example, when the recording is performed by shifting the recording start position of the recording data with respect to the recording reference position on the recording medium within a range of a shift quantity ±α at the maximum, the recording start positions of the recorded data (the data which has already been recorded) and the recording data (the data which is currently recorded) are shifted by 2α at themaximum. As the shift quantity becomes larger, establishing the synchronization becomes more difficult at the time of reproducing the recording data and rewriting new data, and accuracy of reproducing the recording data or rewriting the new data problematically decreases.

The present invention has been achieved in order to solve the above problems. It is an object of this invention to provide an information recording and reproducing apparatus, an information recording method and an information recording program which can maintain accuracy of recording and reproducing data on a rewritable-type recording medium capable of repeated recording and which can realize improvement of a number of possible rewriting.

According to one aspect of the present invention, there is provided an information recording and reproducing apparatus which records information on a rewritable-type recording medium, including a recording reference position detecting unit which detects a recording reference position on the recording medium, and a recording unit which records recording data on the basis of the detected recording reference position, wherein the recording unit records the recording data by making a sync pattern of the recording data correspond to the recording reference position at a time of starting of recording, and records the recording data by shifting the sync pattern of the recording data with respect to the recording reference position after starting the recording.

The above-mentioned information recording and reproducing apparatus can record information, such as image data and contents, on an information recording medium capable of repeated recording, such as an optical disc represented by a DVD-RW and a DVD+RW. The above-mentioned information recording and reproducing apparatus detects the recording reference position on the information recordingmedium in order to establish synchronization of the recording data at the time of the recording. The recording reference position may be a pre-format which is provided on the optical disc in advance, for example. On the basis of the recording reference position, the information recording and reproducing apparatus records the recording data by making the sync pattern of the recording data correspond to the recording reference position at the time of starting the recording, and records the recording data by shifting the sync pattern of the recording data with respect to the recording reference position after starting the recording.

Thereby, at a position at which different data is rewritten on the information recording medium, the shift between the recording start position of the recorded data and the recording start position of the recording data for rewriting can be small. Therefore, the information recording and reproducing apparatus can easily detect a top position of the recorded data which is rewritten, and can easily establish the synchronization. In addition, since the information recording and reproducing apparatus continues the recording by shifting the sync pattern with respect to the recording reference position after starting the recording, there is a small probability that the recording positions of the sync pattern coincide with each other in rewriting, and the number of possible rewriting can be improved.

The recording unit may increase a shift quantity between the sync pattern of the recording data and the recording reference position up to a predetermined shift quantity after starting the recording, and may continue the recording with the shift quantity maintained at the predetermined shift quantity afterward. More concretely, the recording unit may include a unit which detects the shift quantity between the sync pattern of the recording data and the recording reference position, and a unit which gradually increases the shift quantity when the detected shift quantity is smaller than the predetermined shift quantity, and which maintains the shift quantity at the predetermined shift quantity when the detected shift quantity is identical to the predetermined shift quantity.

The recording unit may perform the recording while vary ing the shift quantity between the sync pattern of the recording data and the recording reference position within a range of the predetermined shift quantity after starting the recording.

According to another aspect of the present invention, there is provided an information recording and reproducing apparatus which records information on a rewritable-type recording medium, including a recording reference position detecting unit which detects a recording reference position on the recording medium, and a recording unit which records recording data on the basis of the detected recording reference position, wherein the recording unit records the recording data by shifting a sync pattern of the recording data with respect to the recording reference position by an initial shift quantity at a time of starting of recording, and records the recording data by shifting the sync pattern of the recording data with respect to the recording reference position within a range of a predetermined shift quantity after starting the recording, and wherein the initial shift quantity is smaller than the predetermined shift quantity.

The above-mentioned information recording and reproducing apparatus can record the information, such as the image data and the contents, on an information recording medium capable of repeatedrecording the information, such as the optical disc represented by the DVD-RW and the DVD+RW. The above-mentioned information recording and reproducing apparatus detects the recording reference position on the information recording medium in order to establish synchronization of the recording data at the time of the recording. The recording reference position may be the pre-format provided on the optical disc in advance, for example. On the basis of the recording reference position, the information recording and reproducing apparatus records the recording data by shifting the sync pattern of the recording data with respect to the recording reference position by the initial shift quantity at the time of starting the recording, and records the recording data by shifting the sync pattern of the recording data with respect to the recording reference position within the range of the predetermined shift quantity after starting the recording.

By making the initial shift quantity smaller than the predetermined shift quantity, the shift between the recording start positions of the recorded data and the recording data for rewriting can be small at the portion at which the different data is rewritten on the information recording medium. Therefore, the information recording and reproducing apparatus can easily detect the top position of the recording data which is rewritten, and can easily establish the synchronization. Inaddition, after starting the recording, since the information recording and reproducing apparatus performs the recording by shifting the sync pattern with respect to the recording reference position, the probability that the recording positions of the sync pattern of the recorded data and the recording data in rewriting correspond to each other becomes small, and the number of possible rewriting can be improved.

The recording unit may randomly determine the predetermined shift quantity. Thereby, in the rewriting area, the probability that the recording positions of the sync pattern of the recorded data and the recording data in rewriting correspond to each other becomes small, and the number of possible rewriting can be improved.

According to still another aspect of the present invention, there is provided an information recording method of performing recording identical to the recording by the above-mentioned information recording and reproducing apparatus. In addition, there is also provided a computer program product in a computer-readable medium executed by an information recording apparatus, including a computer, to record information on an rewritable-type medium, by which recording identical to the recording by the above-mentioned information recording and reproducing apparatus is performed.

The nature, utility, and further features of this invention will be more clearly apparent from the following detailed description with respect to preferred embodiment of the invention when read in conjunction with the accompanying drawings briefly described below.
FIG. 1 is a diagram showing a recording structure of an optical disc and a structure of recording data.
FIG. 2A is a diagram showing a method of normal recording, and FIGS. 2B and 2C are diagrams showing a recording method according to a first embodiment of the present invention, which are for explaining a method of recording data on a rewritable-type recording medium.
FIGS. 3A and 3B are diagrams for explaining a shift between sync pattern 'positions in rewriting portions of different recording data.
FIG. 4 is a diagram for explaining variation of a period of a recording clock according to the first embodiment of the present invention.
FIG. 5 is a diagram showing variation in time of a shift quantity of a recording position according to the first embodiment of the present invention.
FIG. 6 is a diagram for explaining a shift between sync pattern positions in a rewriting portion according to a second embodiment.
FIG. 7 is a diagram for explaining a method of recording data according to a third embodiment of the present invention.
FIG. 8 is a block diagram of an information recording and reproducing apparatus which is an embodiment of the present invention.
FIG. 9 is a flow chart of a data recording process according to the present invention.

The preferred embodiments of the present invention will now be described below with reference to the attached drawings. [Method of Controlling Recording Start Point]

The description will be given of a method of recording data on an information recording medium according to the embodiment of the present invention below.

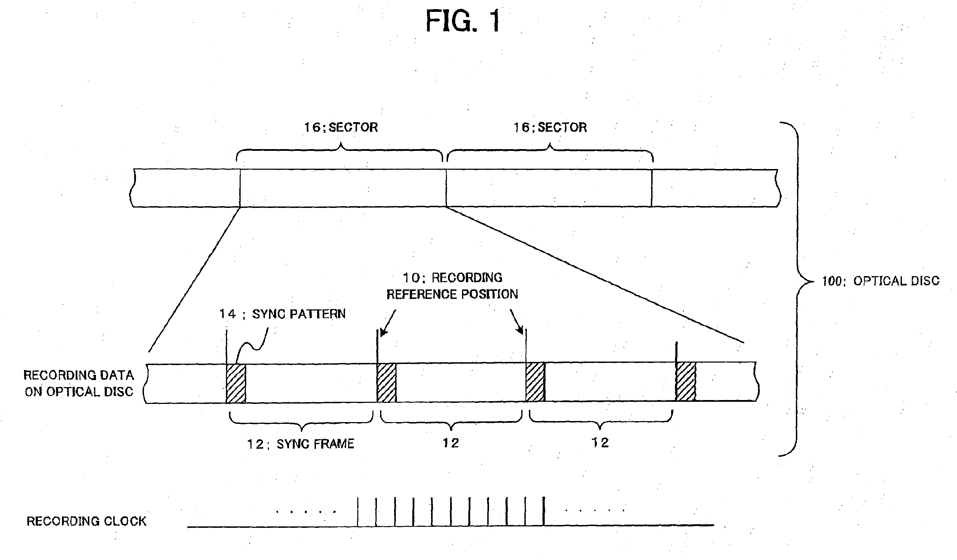

First, a general method of recording data on the information recording medium will be described with reference to FIG. 1. It can be assumed that the information recording medium in FIG. 1 is an optical disc 100 capable of recording the information with high-density, such as the DVD-RW and the DVD+RW.

FIG. 1 shows a schematic diagram of a recording structure of the optical disc 100. On the optical disc 100, management of the recording data is performed by a unit of a physical sector 16. One sector 16 includes plural sync frames 12, as shown in a middle portion in FIG. 1. For example, one sector 16 includes twenty-six sync frames 12, and further one ECC (Error Correcting Code) unit, which is not shown, includes sixteen sectors 16.

The recording data to be recorded on the optical disc 100 is divided by the unit of the sync frame 12 as an information unit in advance. It is noted that a length of one sync frame 12 is 1488 times as long as a unit length (hereafter, it is indicated as "T") corresponding to a bit interval which is defined by a recording format at the time of recording the recording data.

Moreover, a head portion of one sync frame 12 includes a sync pattern 14 as the sync pattern. The sync pattern 14 is used for establishing synchronization for each sync frame 12. A position of a top pit of an LPP (Land Pre-pit) preformed on the optical disc 100 indicates a recording reference position 10 at the time of recording the information on the optical disc 100. The data is recorded so that the sync pattern 14 of the recording data corresponds to the recording reference position 10 on the optical disc 100. Therefore, by performing a phase correction of a recording clock on the basis of the position of the LPP, additional-recording and rewriting which start highly accurate recording by minimizing a link from the end of the recorded area become possible. It is noted that the sync pattern 14 has the length of 14T, for example.

By synchronizing the recording data to be recorded with the recording clock having a predetermined frequency shown at a lower portion in FIG. 1 by the unit of the above sync frame 12, the data is recorded on the optical disc 100. The recording clock is synchronized with the recording reference position 10 on the optical disc 100, and on the basis of the recording clock, the recording is performed so that the sync pattern 14 of the recording data corresponds to the recording reference position 10.

Next,'the description will be given of a recording method, according to the present invention, at the time of starting the recording of the information on the optical disc 100 having the above-mentioned recording structure.

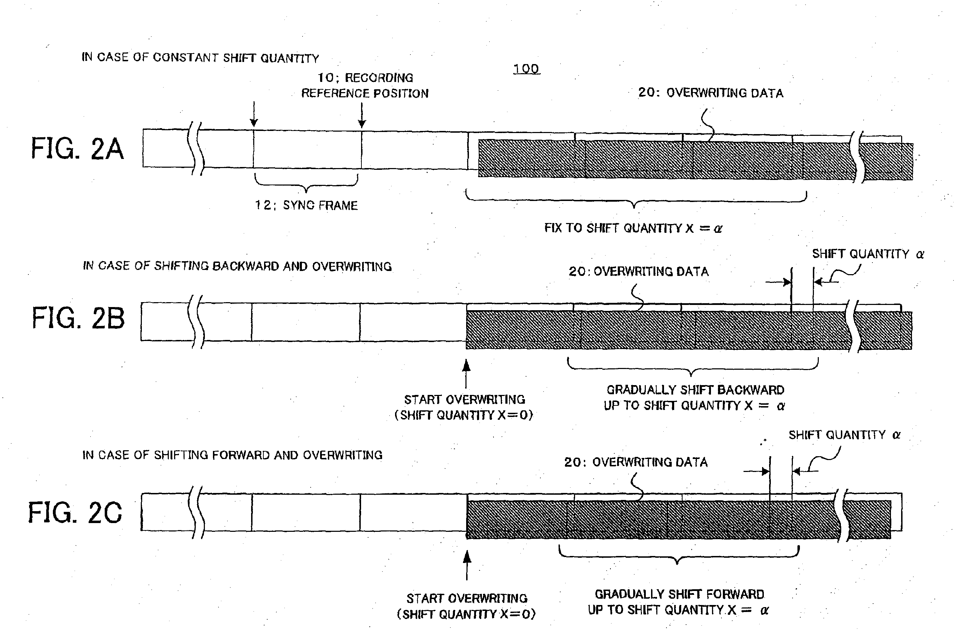

As described above, when the data is recorded on the rewritable-type disc capable of repeated recording, such as the DVD-RW, if the sync pattern 14 is repeatedly recorded at the same position on the optical disc 100 over and over again, the position and a circumference thereof are deteriorated by a thermal stress. Therefore, overwriting is generally performed by a method shown in FIG. 2A. The recording structures shown in FIGS. 2A to 2C are identical to the recording structure of the optical disc 100 shown in the middle portion in FIG. 1, and the data to be recorded is recorded from the left side to the right side in FIGS. 2A to 2C. In addition, the explanation will be given by assuming the rewritable-type recording medium, such as the DVD-RW, the DVD+RW and the like, as the optical disc 100.

The recording method shown in FIG. 2A adopts a method of recording the data by randomly shifting the recording start position on the optical disc 100 with respect to the recording reference position 10. Concretely, the recording is performed by shifting the recording start position of overwriting data 20 with respect to the recording reference position 10 by a shift quantity α (i.e., α is a fixed value) which is randomly determined. The recording is continued by maintaining the shift quantity α until the recording of one recording data is completed. When another data is recorded, the shift quantity α is newly determined by using a random number and the like, and the recording is started.

In FIG. 2A, the method of recording the data by shifting the recording start position of the overwriting data 20 in the direction of the recording on the optical disc 100 (from inside to outside) is shown, but the recording start position may be shifted in the opposite direction. In addition, the shift quantity α is determined at the beginning, and the recording is performed with the shift quantity α fixed, while one recording data is recorded. Namely, while one recording data is recorded, the recording is performed in a state that the position of the sync pattern 14 is shifted with respect to the recording reference position 10 by the shift quantity α. As the shift quantity α, the value is determined so that the recording start position is within an LPP signal included in the optical disc 100. Therefore, the shift quantity α can be set to the value around ±5T at the maximum on the basis of the recording reference position 10, for example.

If the above-mentioned recording method is performed, since a probability that the sync pattern 14 is repeatedly recorded at the same position over and over again becomes small, a number of possible rewriting on the optical disc can be improved.

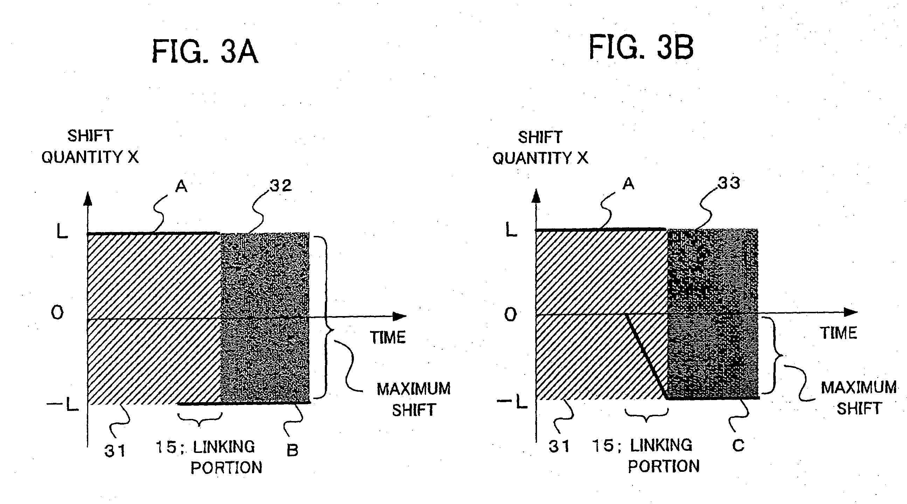

However, the above-mentioned method has a problem shown in FIG. 3A. In FIG. 3A, a horizontal axis indicates time, and a vertical axis indicates a shift quantity X between the recording start position of the recording data and the recording reference position 10. A straight line A indicates the shift quantity between the recording start position of the data which has been recorded (hereafter, it is just called "recorded data") and the recording reference position 10. Moreover, the straight line A indicates that the recording start position is shifted with respect to the recording reference position 10 by a shift quantity L, and that the shift quantity does not vary with regard to time. It is noted that the above-mentioned shift quantity "L" indicates a maximum value that the recording start position can be shifted with respect to the recording reference position 10, i.e., a maximum shift quantity. A hatched area 31 indicates a range within which the shift quantity of the recording start position of the recorded data with respect to the recording reference position 10 can be.

On the other hand, a straight line B indicates the shift quantity of the recording start position of the recording data which is currently recorded (hereafter, it is just called "recording data") with respect to the recording reference position 10. In this example, the straight line B indicates a case that the recording start position is shifted with respect to the recording reference position 10 in the direction opposite to the recording direction by the maximum shift quantity L (shown as "-L" because of the shift in the opposite direction). An area 32 indicates a range within which the shift quantity of the recording start position of the recording data with respect to the recording reference position 10 canbe. Further, a linking portion 15 is a portion at which the above-mentioned areas 31 and 32 are overlapped with each other. Namely, the linking portion 15 means a link between the recorded data and the recording start position of the recording data.

As described above, in the method of setting such the recording start position, the recorded data and the recording start position of the recording data are shifted by the double of the maximum shift quantity L at the maximum, i.e., by 2L. Like this, as the shift between the recorded data and the recording start position of the recording data becomes larger, the probability that processing accuracy, such as reading of the recorded data, is affected becomes higher, e.g., establishing the synchronization becomes more difficult.

### (1st Embodiment)

The present invention adopts a recording method for solving the above-mentioned problem. A recording method according to a first embodiment of the present invention will be explained below.

In the first embodiment, the recording method sets the recording start position on the optical disc 100 to the recording reference position 10 at the time of starting the recording, and gradually shifts the position of the sync pattern 14 of the recording data from the recording reference position 10 afterward. When the shift quantity X (X is a variable) reaches the predetermined shift quantity α, the recording is continued with the shift quantity X fixed to the shift quantity α.

The above-mentioned recording method will be concretely explained with reference to FIG. 2B. At the time of starting the recording, the recording of the overwriting data 20 indicated by diagonal lines is started so that the position of the sync pattern 14 in the recording data corresponds to the recording reference position 10 on the optical disc 100, i.e., at the shift quantity X = 0. Afterward, the recording is continued with gradually increasing the shift quantity X until the shift quantity X between the position of the sync pattern 14 in the recording data and the recording reference position 10 on the optical disc 100 reaches the predetermined shift quantity α. When the shift quantity X between the position of the sync pattern 14 and the recording reference position 10 reaches the predetermined shift quantity α, the recording is further continued with the shift quantity X fixed to the predetermined shift quantity α. As the predetermined shift quantity α, a random value is determined between the maximum value L and the minimum value -L of the above-mentioned shift quantity X. The predetermined shift quantity α thus determined is used until the recording of one data to be recorded is completed. When the next recording data is recorded, the predetermined shift quantity α is newly determined, and then the recording is started. It is noted that FIG. 2B shows an example of the recording by shifting the position of the sync pattern 14 in the recording direction of the optical disc 100, which is backward with respect to the recording reference position 10.

On the other hand, FIG. 2C shows an example of the recording by shifting the position of the sync pattern 14 of the recording data in the direction opposite to the recording direction of the optical disc 100, which is forward with respect to the recording reference position 10. In the case, at the time of starting the recording, the recording is started so that the sync pattern 14 of the overwriting data 20 corresponds to the recording reference position 10 on the optical disc 100, and then the recording is continued with gradually decreasing the shift quantity X until the shift quantity X between the position of the sync pattern 14 and the recording reference position 10 reaches the predetermined shift quantity α, which is minus in the case. When the shift quantity X reaches the predetermined shift quantity α, the recording of the overwriting data 20 is performed with the shift quantity X fixed to the quantity α.

Like this, if the recording is performed at the shift quantity X = 0 to make the sync pattern 14 correspond the recording reference position 10 on the optical disc 100 at the time of starting the recording, the maximum value of the shift between the recorded data andthe recording start position of the recording data can be smaller than 2L in the area inwhich different recording data are overlapped with each other on the optical disc 100. A detailed explanation thereof will be given with reference to FIG. 3B.

In FIG. 3B, the horizontal axis indicates time, and the vertical axis indicates the shift quantity X between the recording start position of the recording data and the recording reference position 10. In FIG. 3B, the straight line A indicates the shift quantity X between the recording start position of the recorded data and the recording reference position 10, and the recording start position of the recorded data is shifted by the maximum value L in the recording direction in the example. The hatched area 31 shows the range within which the shift quantity X between the recording start position of the recorded data and the recording reference position 10 can be. On the other hand, a line segment C indicates the shift quantity between the recording start position of the recording data and the recording reference position 10. The recording of the recording data by the line segment C starts from the position at which the sync pattern 14 corresponds to the recording reference position 10, and the position of the sync pattern 14 of the recording data is linearly shifted with respect to the recording reference position 10 (in the example, the position of the sync pattern 14 is shifted in the direction opposite to the recording direction) afterward. When the shift quantity X reaches the quantity "-L", the recording is continued with the shift quantity fixed to the quantity -"L". An area 33 shows the range within which the shift quantity X between the sync pattern 14 of the recording data and the recording reference position 10 can be. Further, the linking portion 15 is the portion at which the areas 31 and 33 are overlapped with each other, and it means the link between the recorded data and the recording data.

As shown in FIG. 3B, in the recording method according to the first embodiment, the shift quantity X between the position of the sync pattern 14 of the recorded data and the recording start position of the recording data is L at the maximum. Though the shift between the position of the sync pattern 14 of the recorded data and the recording start position of the recording data is twice as large as L at the maximum in the above-mentioned normal method, the shift can be half in the recording method according to the present invention. This is because the recording is started from the recording reference position 10 on the optical disc 100, and the recording is continued by gradually shifting the recording start position. By the recording method according to the present embodiment, in the rewritable-type recording medium, the number of possible rewriting can be improved with the accuracy maintained at the time of reading the recording data.

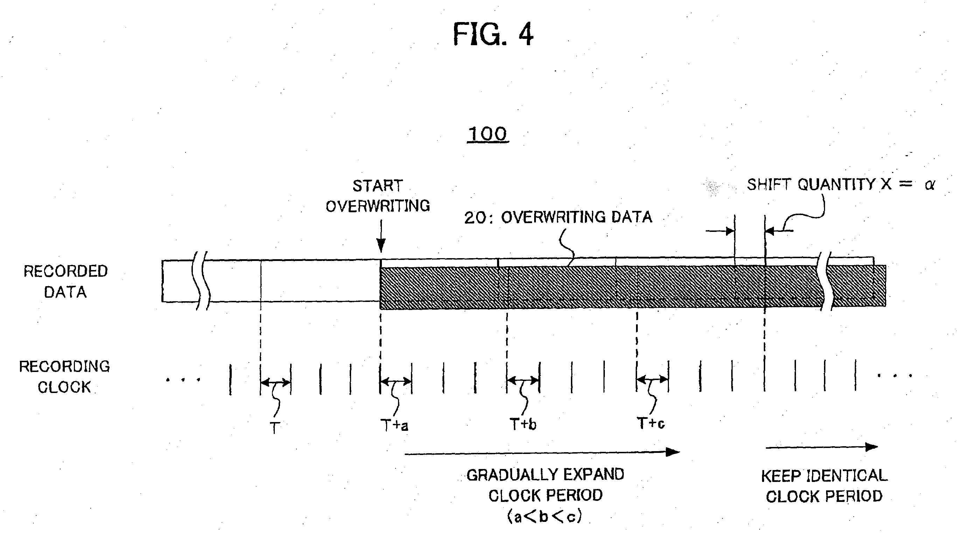

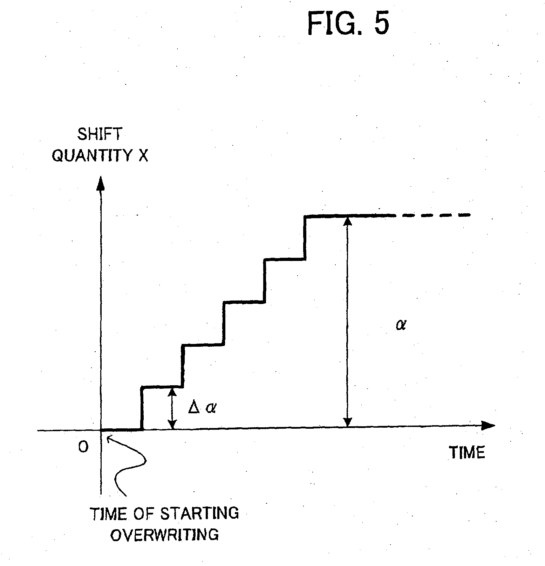

Next, the description will be given of a concrete method of making the shift quantity X between the position of the sync pattern 14 of the recording data and the recording reference position 10 of the optical disc 100 gradually reach the predetermined shift quantity α in the recording method according to the first embodiment, with reference to FIG. 4 and FIG. 5.

An upper portion in FIG. 4 shows the recorded data which is recorded on the optical disc 100, and a lower portion in FIG. 4 shows the recording clock which is used at the time of the recording. In the upper portion, the overwriting data 20 is indicated by diagonal lines. The overwriting data 20 is identical to the above-mentioned overwriting data 20, and it is assumed that the recording of the overwriting data 20 starts from the recording reference position 10 on the optical disc 100. As shown in the lower portion in FIG. 4, a period of the recording clock (i.e., time width) which is used for the recording of the recorded data is prescribed as "T".

In the present embodiment, when the new data is recorded on the optical disc 100, the recording is started by making the sync pattern 14 of the recording data correspond to the recording reference position 10 on the optical disc 100 at the time of starting the recording, and the recording is continued by gradually shifting, up to the predetermined shift quantity α, the position of the sync pattern 14 of the recording signal with respect to the recording reference position 10 afterward. Since a number of the recording clocks is identical in one sync frame 12, the period of the recording clock is gradually varied. Concretely, as shown in FIG. 4, the period of the recording clock gradually increases in the recording direction, from (T+a) to (T+b) and then to (T+c) : (a<b<c). In the present example, when the period of the recording clock becomes (T+c), the shift quantity X between the position of the sync pattern 14 of the recording signal and the recording reference position 10 reaches the predetermined shift quantity α. After the shift quantity X between the position of the sync pattern 14 and the recording reference position 10 reaches the predetermined shift quantity α, the recording is continued by fixing the period of the recording clock to the original period T.

Next, the description will be given of the time variation of the shift quantity X between the position of the sync pattern 14 of the recording signal and the recording reference position 10 when the period of the recording clock is varied, as described above, with reference to FIG. 5. In FIG. 5, the horizontal axis indicates time, and the vertical axis indicates the shift quantity X of the sync pattern 14 of the data to be recorded. Identically to the above-mentioned recording method, at the time of starting the recording, the recording is started so that the position of the sync pattern 14 of the recording data corresponds to the recording reference position 10 on the optical disc 100, i.e., at the shift quantity X = 0. Immediately after that, the shift quantity X is increased by the step Δα as time goes by. When the predetermined time goes by and the shift quantity X reaches the predetermined shift quantity α, the recording is continued with the shift quantity X fixed to the predetermined shift quantity α afterward. It is noted that the process of gradually shifting the position of the sync pattern 14 of the data to be recorded can be executed by varying a control voltage which a VCO controller 209 explained later supplies to a recording clock generating unit 208.

### (2nd Embodiment)

In the above-mentioned first embodiment, in recording the data, the position of the sync pattern 14 corresponds to the recording reference position 10 on the optical disc 100 at the time of starting the recording. Thereby, in the linking portion 15 on the optical disc 100 at the time of recording the different data, the shift between the recorded data and the recording start position of the recording data can be smaller than the double of the maximum shift quantity L. However, even if the recording is not started from the recording reference position 10, when the shift quantity between the recording position of the sync pattern 14 of the recording data and the recording reference position 10 is smaller than L at the time of starting the recording, the shift between the recorded data and the recording start position of the recording data can be smaller than the double of the maximum shift quantity L. A recording method according to a second embodiment is based on the above-mentioned aspect.

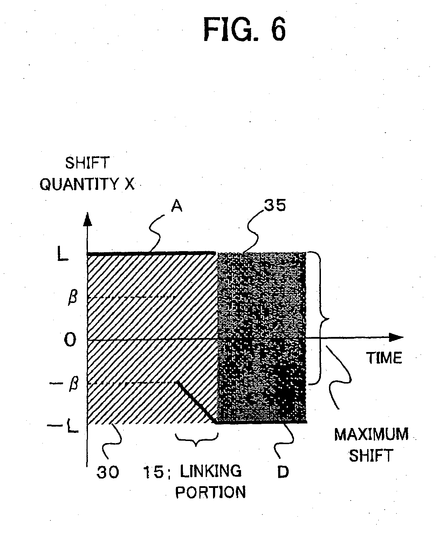

The concrete recording method according to the second embodiment will now be explained with reference to FIG. 6. In FIG. 6, the horizontal axis indicates time, and the vertical axis indicates the shift quantity X between the position of the sync pattern 14 of the recording data and the recording reference position 10. The straight line A indicates the time variation of the shift quantity X between the position of the sync pattern 14 of the recorded data and the recording reference position 10, and it indicates that the position of the sync pattern 14 of the recorded data is regularly shifted with respect to the recording reference position 10 byL. A hatched area 30 indicates the range within which the position of the sync pattern 14 of the recorded data with respect to the recording reference position 10 can be. On the other hand, a line segment D shows an example that the recording is performed on a condition that the position of the sync pattern 14 is shifted with respect to the recording reference position 10 in the direction opposite to the recording direction by β, at the time of starting the recording. The line segment D shows an example that the recording of the recording data is started from a position which is shifted from the recording reference position 10 on the optical disc 100 by β, the position of the sync pattern 14 of the recording signal is linearly shifted with respect to the recording reference position 10, and the recording is continued with the shift quantity X fixed to the maximum shift quantity L when the shift quantity X reaches the maximum shift quantity L. An area 35 shows the range within which the recording start position of the recording data with respect to the recording reference position 10 can be. Further, the linking portion 15 is the portion at which the above-mentioned areas 30 and 35 are overlapped with each other.

Therefore, the shift quantity between the recording start positions of the recorded data and the recording data is (L+β) at the maximum. Since β is chosen from the value smaller than the maximum shift quantity L, the above-mentioned shift quantity (L+β) is smaller than the double of L. Therefore, by the recording method according to the second embodiment, without decreasing the accuracy of reading the recorded data in the overwriting portion, the number of possible rewriting to the rewritable-type recording medium can be improved, too.

### (3rd Embodiment)

Next, a method of recording the data according to a third embodiment of the present invention will be explained. Identically to the recording method according to the first embodiment, in the third embodiment, the recording is performed so that the position of the sync pattern 14 corresponds to the recording reference position 10 at the time of starting the recording, and the position of the sync pattern 14 is gradually shifted with respect to the recording reference position 10 afterward. However, in the third embodiment, the shift quantity X between the position of the sync pattern 14 and the recording reference position 10 is always varied, and even if the predetermined time goes by (i.e., even if the shift quantity X reaches the predetermined shift quantity α), the shift quantity X is not fixed to the predetermined shift quantity α afterward.

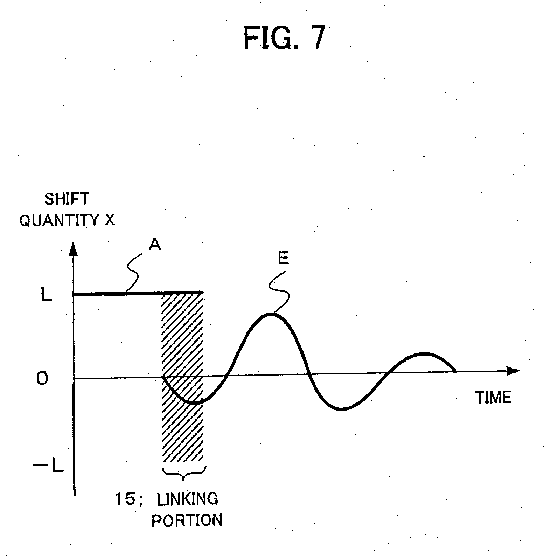

FIG. 7 shows a concrete example of the recording method according to the third embodiment. In FIG. 7, the horizontal axis indicates time, and the vertical axis indicates the shift quantity X between the position of the sync pattern 14 and the recording reference position 10. The straight line A is the position of the sync pattern 14 of the recorded data, and the position is shifted with respect to the recording reference position 10 by the maximum shift quantity L in the case. On the other hand, a curved line E indicates the time variation of the shift quantity X between the position of the sync pattern 14 of the recording data and the recording reference position 10. In the curved line E, the recording is started by making the position of the sync pattern 14 correspond to the recording reference position 10 on the optical disc 100, and the recording is continued by non-linearly varying the shift quantity X with respect to the recording reference position 10 for each sync pattern 14 of the recording data afterward. It is noted that the shift quantity X is varied within the range of ±L. In addition, the shift quantity X is determined by generating the randomnumber for each sync pattern 14 of the data to be recorded, for example.

As described above, in the recording method according to the third embodiment, since the recording is performed by generating the random number for each sync pattern 14 and randomly shifting the position of the sync pattern 14 with respect to the recording reference position 10, a probability that the recording start position of the new recording data coincides with the position of the sync pattern 14 of the recorded data becomes small. Thereby, the number of possible rewriting can be increased. In addition, by the recording method according to the present embodiment, when the different data is rewritten, the shift of the recording position can be also smaller than the double of the maximum shift quantity L at the maximum.

In the third embodiment, at the time of starting the recording, even if the recording is started from the position which is shifted with respect to the recording reference position 10 by the shift quantity smaller than L, the identical effect can be obtained without making the position of the sync pattern 14 correspond the recording reference position 10 on the optical disc 100. When the different data is rewritten, the shift of the recording position can be smaller than the double of the maximum shift quantity L at the maximum.

### [Information Recording and Reproducing Apparatus]

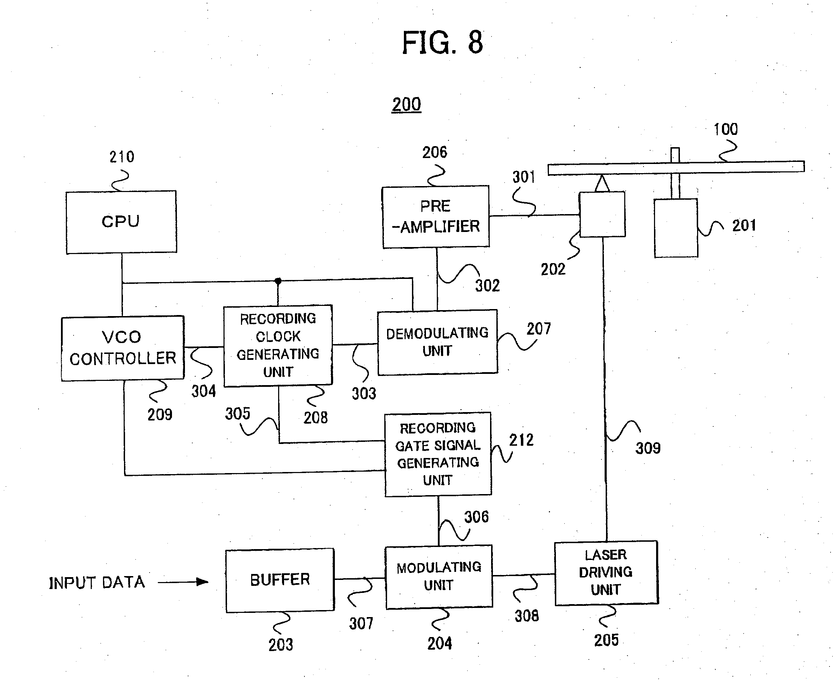

The description will be given of the information recording and reproducing apparatus according to the present invention below. FIG. 8 is a block diagram showing a schematic configuration of an information recording and reproducing apparatus 200.

The information recording and reproducing apparatus 200 can record the information such as the image data, the contents and the like, on the optical disc 100 such as the DVD-RW and the like, and can further reproduce the information which is recorded on the optical disc 100 such as a DVD-ROM and the like. As the optical disc 100, the rewritable-type recording medium capable of repeated recording, such as the DVD-RW and the DVD+RW, is applicable.

The optical pickup 202 outputs an RF (Radio Frequency) signal 301 corresponding to a reflected light of a light beam at the time of the recording and the reproduction. When the optical disc 100 adopts a wobble land/groove system, control information, such as wobbling, lands, grooves, prepits and the like, is included in the RF signal 301 because the wobbled lands and grooves, the prepits and the like are formed in advance on a recording surface of the optical disc 100. Moreover, when the information is already recorded on the optical disc 100, the recorded information is incorporated in the RF signal 301, too.

A pre-amplifier 206 amplifies the RF signal 301 outputted from the optical pickup 202, and outputs an amplified RF signal 302 to a demodulating unit 207. The demodulating unit 207 generates a wobble frequency signal, a tracking error signal, a focus error signal and the like from the RF signal 302, and outputs them. In addition, the demodulating unit 207 generates a disc reference position signal 303 from the RF signal 301 outputted from the preamplifier 206, on the basis of a prepit format position of the prepit and the like, and supplies it to the recording clock generating unit 208.

A CPU 210 includes a memory (not shown) and the like, and the memory stores a voltage pattern to be supplied to a VCO controller 209. The voltage pattern can be a pattern which increases and'decreases stepwise from a constant voltage value, for example, as shown in FIG. 5. The VCO controller 209 supplies the voltage pattern, which is supplied from the CPU 210, to the recording clock generating unit 208 as a control voltage signal 304.

The recording clock generating unit 208 includes a VCO (Voltage Controlled Oscillator). Also, the recording clock generating unit 208 generates a recording clock signal 305 which has a frequency corresponding to the control voltage signal 304 supplied from the VCO controller 209 and which is synchronized with the disc reference position signal 303 supplied from the demodulating unit 207, and supplies it to a recording gate signal generating unit 212. The recording gate signal generating unit 212 generates a recording gate signal 306 which is synchronized with the recording clock signal 305, and supplies it to the modulating unit 204.

On the other hand, the buffer 203 temporarily stores input data which is supplied via an interface (not shown) once. The input data 307 is data to be recorded on the optical disc 100, and the input data 307 which is inputted to the buffer 203 is supplied to the modulating unit 204.

The modulating unit 204 applies the code-conversion to the input data 307. For example, when the optical disc 100 is the DVD-RW, the modulating unit 204 applies the code-conversion, such as 8-16 modulation, to the input data. Then, the modulating unit 204 gates the modulated signal by the recording gate signal 306 which is inputted from the recording gate signal generating unit 212, and supplies it to a laser drivingunit 205 as amodulating signal 308. Thereby, the modulating signal 308 which is outputted from the modulating unit 204 is synchronized with the recording clock 305.

Concretely, as shown in FIG. 4, the frequency of the recording clock is gradually reduced and the period is increased until the shift quantity X between the position of the sync pattern 14 and the recording reference position 10 reaches the predetermined shift quantity α. The frequency of the recording clock is fixed and the period is maintained at the constant value T, after the shift quantity X reaches the predetermined shift quantity α.

The VCO controller 209, the recording clock generating unit 208 and the recording gate signal generating unit 212 form a PLL (Phase Locked Loop) circuit. Namely, by the PLL circuit, the recording clock used for recording the data establishes a phase synchronization with the disc reference position signal corresponding to the prepit recorded on the optical disc 100.

The laser driving unit 205 generates a driving signal 309 which adjusts a laser power on the basis of the modulating signal 308 supplied from the modulating unit 204, and supplies it to the optical pickup 202. The optical pickup 202 includes a laser diode (not shown), and controls emission of the laser diode on the basis of the driving signal 309 supplied from the laser driving unit 205 to record the data on the optical disc 100.

Like this, the CPU 210 controls the above-mentioned respectivecomponents, and shifts the position of the sync pattern 14 of the recording data according to the present invention with respect to the recording reference position 10 while recording the recording data. It is noted that the CPU 210 can control the whole information recording and reproducing apparatus 200, in addition to the above-mentioned control, and can control and manage the above-mentioned transmission of the information among the respective components.

### [Data Recording Process]

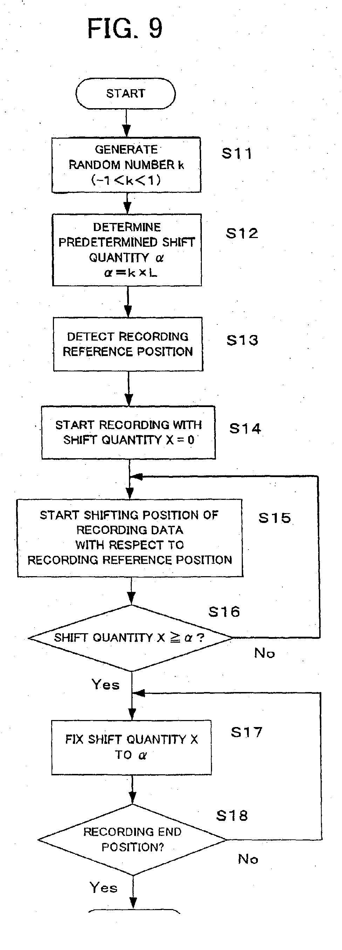

Next, the description will be given of a data recording process which is executed in the above-mentioned information recording and reproducing apparatus 200. FIG. 9 shows a flow chart of the data recording process. It is noted that the method of recording the data according to the first embodiment is applied to an example shown in FIG. 9. Namely, at the time of starting the recording of the data, the recording is started by making the position of the sync pattern 14 of the recording data correspond to the recording reference position 10 on the optical disc 100, and the position of the sync pattern 14 of the recording data is gradually shifted with respect to the recording reference position 10 by the shift quantity X afterward. When the shift quantity X reaches the predetermined shift quantity α, the recording is continued with the predetermined shift quantity α maintained afterward. It is noted that the CPU 210 mainly executes a process which will be explained below by controlling the respective units shown in FIG. 8.

First, in step S11, the CPU 210 generates a random number "k" in order to determine the predetermined shift quantity α which is used in a subsequent process. If the CPU 210 generates the random number k and determines the different shift quantity α at every time of recording the data by the predetermined unit, it is possible to reduce the probability that the positions of the sync patterns 14 of the recorded data and the recording data for rewriting are overlapped with each other at the time of rewriting the recording data. It is noted that the CPU 210 generates the random number k within the range of -1<k<1. When the random number k is determined, the process goes to step S12.

In step S12, the CPU 210 determines the predetermined shift quantity α on the basis of the random number k which is determined in step S11. The predetermined shift quantity α is calculated by multiplying the above-mentioned maximum shift quantity L and the random number k together. The memory and the like in the CPU 210 can store the value of the maximum shift quantity L in advance. When the predetermined shift quantity a is calculated, the process goes to step S13.

In step S13, the recording reference position 10 on the optical disc 100 is detected. The recording reference position 10 is the position of the LPP formed on the optical disc 100, for example. Therefore, in step S13, the demodulating unit 207 generates the disc reference position signal 303 from a reading signal of the optical disc 100. Then, the process goes to step S14.

In step S14, the recording of the data is started from the recording reference position 10 which is detected in step S13. Namely, by making the position of the sync pattern 14 of the recording data correspond to the recording reference position 10 (i.e., the shift quantity X = 0), the recording is started. Then, the process goes to step S15.

In step S15, the process of gradually shifting the position of the sync pattern 14 of the recording signal with respect to the recording reference position 10 on the optical disc 100 is executed. In step S15, the CPU 210 controls the VCO controller 209 and varies the time width of the recording clock. Thereby, for example, as shown in FIG. 5, the CPU 210 shifts the position of the sync pattern 14 of the recording signal by Δα. When the above-mentioned process ends, the process goes to step S16.

In step S16, the CPU 210 calculates the shift quantity X between the position of the sync pattern 14 of the recording data and the recording reference position 10 on the optical disc 100, and determines whether the shift quantity X is equal to or larger than the predetermined shift quantity α or not. If the calculated shift is equal to or larger than the predetermined shift quantity α, the process goes to step S17, and if the calculated shift quantity X is smaller than the predetermined shift quantity α, the process returns to step S15.

When the shift quantity X is smaller than the predetermined shift quantity α (step S16; No), the CPU 210 executes the process of further shifting the position of the sync pattern 14 of the recording signal with respect to the recording reference position 10 on the optical disc 100 in step S15. For example, as shown in FIG. 5, the CPU 210 can further shift the position of the sync pattern 14 of the recording signal by Δα. Like this, by repeating the processes in steps S15 and S16, the CPU 210 gradually increases the shift quantity X between the position of the sync pattern 14 of the recording signal and the recording reference position 10 up to the predetermined shift quantity α.

On the other hand, when the position of the sync pattern 14 of the recording signal is shifted with respect to the recording reference position 10 by the quantity equal to or larger than the predetermined shift quantity α (step S16; Yes), the shift quantity X is fixed to the predetermined shift quantity α in step S17. Namely, the position of the sync pattern 14 is not shifted any more. Therefore, the subsequent recording is performed with the shift quantity X being fixed to the shift quantity α. Then, the process goes to step S18.

In step S18, the CPU 210 determines whether the data to be recorded is at an end position or not. If the recording data is at the end position, the process goes out of the flow chart and ends. On the other hand, if the recording data is not at the end position, the process returns to step S17, and the recording is continued in the state that the shift quantity between the position of the sync pattern 14 of the recording data and the recording reference position 10 is maintained at the shift quantity α.

By the above-mentioned process, in the portion of starting the rewriting of the recording data, the shift between the recording position of the sync pattern 14 of the recorded data and the recording position of the sync pattern of the recording data for rewriting can be set to zero. Thereby, the accuracy of the process of reproducing and recording on the optical disc 100 can be prevented from being deteriorated. Further, since the recording positions of the sync patterns 14 of the recording data are different dependently on the recording data, the number of possible rewriting on the optical disc can also be improved.

## Claims

1. An information recording and reproducing apparatus (200) which records information on a rewritable-type recording medium (100), comprising:
a recording reference position detecting unit (207, 210) which detects a recording reference position (10) on the recording medium; and
a recording unit (202, 205, 210) which records recording data on the basis of the detected recording reference position,
wherein the recording unit records the recording data by making a sync pattern (14) of the recording data correspond to the recording reference position (10) at a time of starting of recording, and records the recording data by shifting the sync pattern (14) of the recording data with respect to the recording reference position (10) after starting the recording.

2. The information recording and reproducing apparatus (200) according to claim 1, wherein the recording unit increases a shift quantity (X) between the sync pattern (14) of the recording data and the recording reference position (10) up to a predetermined shift quantity (α) after starting the recording, and performs the recording with the shift quantity (X) maintained at the predetermined shift quantity (α) after the shift quantity reaches the predetermined shift quantity (α).

3. The information recording and reproducing apparatus (200) according to claim 2, wherein the recording unit comprises:
a unit (210) which detects the shift quantity (X) between the sync pattern (14) of the recording data and the recording reference position (10);
a unit (210) which gradually increases the shift quantity (X) when the detected shift quantity (X) is smaller than the predetermined shift quantity (α), and which maintains the shift quantity (X) at the predetermined shift quantity (α) when the detected shift quantity (X) is identical to the predetermined shift quantity (α).

4. The information recording and reproducing apparatus (200) according to claim 1, wherein the recording unit performs the recording while varying the shift quantity (X) between the sync pattern (14) of the recording data and the recording reference position (10) within a range of the predetermined shift quantity (α) after starting the recording.

5. The information recording and reproducing apparatus (200) according to claim 2, wherein the recording unit randomly determines the predetermined shift quantity.

6. An information recording and reproducing apparatus (200) which records information on a rewritable-type recording medium (100), comprising:
a recording reference position detecting unit (207, 210) which detects a recording reference position (10) on the recording medium; and
a recording unit (202, 205, 210) which records recording data on the basis of the detected recording reference position (10),
wherein the recording unit records the recording data by shifting a sync pattern (14) of the recording data with respect to the recording reference position (10) by an initial shift quantity (β) at a time of starting of recording, and records the recording data by shifting the sync pattern (14) of the recording data with respect to the recording reference position (10) within a range (α) of a predetermined shift quantity after starting the recording; and
wherein the initial shift quantity (β) is smaller than the predetermined shift quantity (α).

7. The information recording and reproducing apparatus (200) according to claim 6, wherein the recording unit randomly determines the predetermined shift quantity (X).

8. An information recording method which records information on a rewritable-type recording medium (100), comprising:
an recording reference position detecting process which detects a recording reference position (10) on the recording medium; and
a recording process which records recording data on the basis of the detected recording reference position,
wherein the recording process records the recording data by making a sync pattern (14) of the recording data correspond to the recording reference position (10) at a time of starting of recording, and records the recording data by shifting the sync pattern (14) of the recording data with respect to the recording reference position (10) after starting the recording.

9. An information recording method which records information on a rewritable-type recording medium (100), comprising:
a recording reference position detecting process which detects a recording reference position (10) on the recording medium; and
a recording process which records recording data on the basis of the detected recording reference position,
wherein the recording process records the recording data by shifting a sync pattern (14) of the recording data with respect to the recording reference position (10) by an initial shift quantity (β) at a time of starting of recording, and records the recording data by shifting the sync pattern (14) of the recording data with respect to the recording reference position (10) within a range (α) of a predetermined shift quantity after starting the recording; and
wherein the initial shift quantity (β) is smaller than the predetermined shift quantity(α).

10. An information recording program executed by an information recording apparatus comprising a computer for recording information on a rewritable-type recording medium (100), the program making the computer function as:
a recording reference position detecting unit (207, 210) which detects a recording reference position (10) on the recording medium; and
a recording unit (202, 204, 210) which records recording data on the basis of the detected recording reference position,
wherein the recording unit records the recording data by making a sync pattern (14) of the recording data correspond to the recording reference position (10) at a time of starting of recording, and records the recording data by shifting the sync pattern (14) of the recording data with respect to the recording reference position (10) after starting the recording.

11. An information recording program executed in an information recording apparatus comprising a computer for recording information on a rewritable-type recording medium (100), the program making the computer function as:
a recording reference position detecting unit (207, 210) which detects a recording reference position (10) on the recording medium; and
a recording unit (202, 204, 210) which records recording data on the basis of the detected recording reference position,
wherein the recording unit records the recording data by shifting a sync pattern (14) of the recording data with respect to the recording reference position (10) by an initial shift quantity (β) at a time of starting of recording, and records the recording data by shifting the sync pattern (14) of the recording data with respect to the recording reference position (10) within a range of a predetermined shift quantity (a) after starting the recording; and
wherein the initial shift quantity (β) is smaller than the predetermined shift quantity (α).
